(19) Europäisches Patentamt
European Patent Office
Office européen des brevets

(11) **EP 1 947 481 B1**

(12) **EUROPÄISCHE PATENTSCHRIFT**

(45) Veröffentlichungstag und Bekanntmachung des Hinweises auf die Patenterteilung:
**26.10.2011 Patentblatt 2011/43**

(51) Int Cl.:
***G01V 8/20*** *(2006.01)*

(21) Anmeldenummer: **07122481.0**

(22) Anmeldetag: **06.12.2007**

(54) **Optoelektronischer Sensor und Verfahren zur Objekterfassung in einem Überwachungsbereich**

Optoelectronic sensor and method for recording objects in a monitoring area

Capteur optoélectronique et procédé de saisie d'objets dans une zone de surveillance

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **20.01.2007 DE 102007003026**

(43) Veröffentlichungstag der Anmeldung:
**23.07.2008 Patentblatt 2008/30**

(73) Patentinhaber: **SICK AG**
**79183 Waldkirch (DE)**

(72) Erfinder: **Wüstefeld, Martin**
**79350 Sexau (DE)**

(74) Vertreter: **Hehl, Ulrich**
**SICK AG**
**Intellectual Property**
**Erwin-Sick-Strasse 1**
**79183 Waldkirch (DE)**

(56) Entgegenhaltungen:
**EP-B- 0 875 873      DE-A1- 4 034 398**
**DE-U1- 20 004 972      DE-U1-202005 003 051**
**DE-U1-202005 009 517**

**Beschreibung**

Die Erfindung betrifft einen optoelektronischen Sensor und ein Verfahren zur Objekterfassung in einem Überwachungsbereich nach den Oberbegriffen von Anspruch 1 bzw. 12.

Sensoren und besonders Lichtgitter werden eingesetzt, um Gefahrenbereiche vor Eingriffen zu schützen. Das kann beispielsweise eine Maschine wie eine Presse sein, deren Arbeitsgang sofort gestoppt werden muss, wenn Bedienpersonal der Maschine zu nahe kommt. Das Lichtgitter bildet dabei eine virtuelle Wand, deren Berührung ein Warn-, meist direkt ein Ausschaltsignal erzeugt.

Dazu wird eine Reihe von Lichtsendern verwendet, die jeweils einen Lichtstrahl auf einen gegenüberliegenden Lichtempfänger richten. Auf diese Weise entsteht ein Netz aus parallelen Lichtstrahlen, dessen Maschengröße und damit die minimale sicher detektierte Objektgröße vom Abstand der Lichtsender zueinander abhängt. Meist wird dabei nicht sichtbares Licht, sondern infrarotes Licht verwendet. Das Prinzip funktioniert aber bei nahezu beliebiger Wellenlänge.

Damit das Lichtgitter eine Strahlenunterbrechung erkennen kann, müssen die Lichtstrahlen der Lichtsender ihre jeweiligen Lichtempfänger erreichen. Sicherheitsnormen, etwa die IEC 61496-2, schreiben dabei zusätzlich vor sicherzustellen, dass den Lichtempfänger nicht versehentlich Licht auf anderem als dem direkten Weg erreicht. Das kann durch eine Umspiegelung durch eine reflektierende Fläche außerhalb des Überwachungsbereichs des Lichtgitters geschehen. Wäre nicht durch die Öffnungswinkel von Lichtsender und -empfänger sichergestellt, dass nur Licht auf dem direkten Weg detektiert wird, könnte ansonsten ein Objekt im Überwachungsbereich des Lichtgitters übersehen werden.

Üblicherweise sind dabei Blenden im Brennpunkt einer Sende- und Empfangsoptik eingesetzt, die für kleine Abstrahlwinkel, unter dem der Lichtsender den zugeordneten Lichtempfänger bestrahlt, sowie kleine Sichtwinkel sorgen, unter dem umgekehrt der Lichtempfänger von dem zugeordneten Lichtsender noch Licht empfängt. Die geforderten Winkel gemäss der Norm sind dabei Designgrundlage. Der Nachteil ist die sich ergebende Notwendigkeit einer sehr genauen Ausrichtung von Lichtempfänger und Lichtsender zueinander. Außerdem sind mechanische Bauteile für die Blenden sowie Optiken an Sender und Empfänger erforderlich.

Wegen der entsprechend kleinen Öffnungswinkel müssen dann die Sendeeinheit und die Empfangseinheit, die sich an den beiden Seiten des Lichtgitters gegenüberstehen und die gewöhnlich aus je einem Gehäuse mit einer Reihe von Lichtsendern bzw. -empfängern bestehen, räumlich genau zueinander ausgerichtet werden. Die Schwierigkeit der Justierung erhöht sich noch, wenn Infrarotlicht verwendet wird, so dass die Strahlen nicht sichtbar sind.

Aus der EP 0 889 332 A1 ist bekannt, einen zusätzlichen kollimierten, sichtbaren Laserrichtstrahl als integrierte Ausrichthilfe zu verwenden. Dessen sichtbarer Lichtpunkt kann auf einen vorgegebenen Zielpunkt ausgerichtet und damit die Raumlage der Sende- und Empfangseinheit zueinander festgelegt werden. Das bedeutet aber zum einen zusätzlichen Aufwand, weil ein zusätzliches Laserelement eingebaut werden muss. Dieses Laserelement muss darüber hinaus zu den Lichtsendern sehr genau ausgerichtet eingebaut sein. Schließlich muss der Laserpunkt auf der Empfangseinheit zunächst einmal eingefangen werden, damit er überhaupt gesehen werden kann.

Bei einem anderen herkömmlichen Verfahren werden Signalpegel jeweils korrespondierender Lichtsender/-empfänger gemessen und angezeigt. Die Ausrichtung ist korrekt, wenn die Intensitätsverteilung zum Rande des Empfängers hin abfällt. Auch hierbei muss zumindest ein Teil des Lichtstrahls erst einmal treffen, bevor eine auswertbare Anzeige möglich ist. Die Signalverarbeitung ist aufwändig und muss zudem für jeden Strahl vorgenommen werden. Je nach optischem Systemaufbau sind die Signalhöhen kein geeignetes Maß für die Qualität der Ausrichtung.

Die EP 0 875 873 B1 schlägt zur Erhöhung der Umspiegelungssicherheit einen ortsauflösenden Lichtempfänger vor, wobei in einem Einlernvorgang die Sollposition des empfangenen Lichts auf dem Lichtempfänger bestimmt wird. Der Sensor schaltet, wenn die Empfangsposition im Betrieb zu weit von dieser Sollposition abweicht, weil davon ausgegangen wird, dass derart versetzt empfangenes Licht nicht auf direktem Weg, sondern nach einer Umspiegelung empfangen wird und der direkte Weg von einem Objekt blockiert ist. Dies macht den Sensor zwar umspiegelungssicher, hilft aber nicht bei der Justierung des Lichtsenders gegenüber dem Lichtempfänger, da nur dann eine Sollposition bestimmt werden kann, wenn überhaupt Licht auf dem ortsauflösenden Empfänger ankommt. Das ist wegen des kleinen Öffnungswinkels des Lichtsenders nur nach einer entsprechend genauen Justierung möglich, für welche die Lehre der EP 0 875 873 B1 keinerlei Hilfestellung anbietet.

Die DE 2005 009 517 U1 offenbart ein Lichtgitter zur Vermessung eines Objekts. Dabei sind erste Optiken für Lichtstrahlen zur Objektvermessung und zweite Optiken für Lichtstrahlen zur Absicherung eines Gefahrenbereichs vorgesehen. Die ersten Optiken erzeugen Sende- beziehungsweise Empfangslichtkeulen mit Querschnitten, die sich in Richtung der durch das Lichtgitter gebildeten Ebene stärker aufweiten als quer dazu. Die zweiten Optiken erzeugen konform zu den einschlägigen Sicherheitsnormen Sende- und Empfangslichtkeulen mit kreisförmigem Querschnitt und jeweils eng begrenztem Öffnungswinkel.

Aus der DE 20 2005 003 051 U1 ist ein Lichtgitter bekannt, welches mit einer Vorsatzoptik versehen ist, um den Öffnungswinkel am Lichtsender beziehungsweise am Lichtempfänger veränderbar zu machen. Größere Öffnungswinkel können nach dieser Lehre nur gewählt werden, wenn keine hohen Sicherheitsvorschriften erfüllt werden müssen.

Der Erfindung liegt daher die Aufgabe zugrunde, das Ausrichten eines optischen Sensors der genannten Art unter Erhalt der Umspiegelungssicherheit zu vereinfachen.

Diese Aufgabe wird durch einen Sensor gemäß Anspruch 1 beziehungsweise ein Verfahren gemäß Anspruch 11 gelöst. Die erfindungsgemäße Lösung hat den Vorteil, dass eine Umspiegelung des Sensors im Rahmen der Sicherheitsnorm, also mittels reflektierender Flächen, die einen Mindestabstand zum Sensor einhalten, weiterhin nicht möglich ist, obwohl der Sensor sendeseitig wesentlich leichter und schneller ausrichtbar ist als ein solcher, der unmittelbar die Bedingungen an die Normöffnungswinkel erfüllt.

Sendeseitig sind keine mechanischen Blenden oder abbildenden Optiken erforderlich. Durch den großen Sendelichtkegel ergeben sich auch nahezu keine Toleranzanforderungen mehr, und notwendige Montageflächen wie Linsenhalter oder Halter für einen vor Streulicht schützenden Tubus können gänzlich entfallen. Dadurch werden die Herstellungskosten für die Lichtsender erheblich gesenkt. Durch den Wegfall der genannten optomechanischen Bauteile kann als Lichtsender bereits eine bloße Leuchtdiode mit Elektronik in einem Umgehäuse verwendet werden. Sendeseitig ist der Sensor damit besonders klein.

Die Erfindung geht von dem Grundgedanken aus, dass für eine Umspiegelungssicherheit nicht notwendig sowohl sendeseitig wie empfangsseitig der Lichtkegel begrenzt werden muss. Die Erfindung erkennt, dass die Umspiegelungssicherheit durch die Anforderung des Normöffnungswinkels für sowohl Lichtsender wie auch Lichtempfänger durch eine verschärfte Anforderung allein an den Öffnungswinkel des Lichtempfängers erreicht werden kann. Der Kompensationsfaktor für den kleineren Öffnungswinkel beträgt zwei, so dass also der halbe Normöffnungswinkel oder ein kleinerer Winkel gewählt werden muss. Somit kann der Sicherheitsnorm mit einem äußerst einfachen Lichtsender genügt werden, der ohne eigene Ausrichtungsmaßnahmen auskommt. Der herkömmliche erste Ausrichtungsschritt, bei dem der Sender gegenüber dem Empfänger ausgerichtet wird, entfällt gänzlich.

Bevorzugt ist der Lichtempfänger ortsauflösend, und die Auswertungseinheit ist weiter für die Bestimmung einer Soll-Lichtempfangsposition auf dem Lichtempfänger und eines Lichtempfangs außerhalb der Soll-Lichtempfangsposition als Objekterfassung ausgebildet. Über den ortsauflösenden Lichtempfänger ist der herkömmliche zweite Ausrichtungsschritt, bei dem der Empfänger umgekehrt gegenüber dem Sender ausgerichtet wird und der erfindungsgemäß der einzige Ausrichtungsschritt ist, erheblich vereinfacht und kann häufig durch einen Einlernvorgang ersetzt werden, bei dem der Benutzer nicht mehr eingreifen muss. Somit kann auch der strengere höchstens halbe Normöffnungswinkel in einer einfachen Ausrichtungsprozedur erreicht werden. Die Mehrkosten eines ortsauflösenden Empfängers werden durch die Einsparungen bei den Sendern überkompensiert.

Vorteilhafterweise weist der Lichtsender eine Optik auf, um den Sendelichtkegel zur Vergrößerung der Reichweite zu verschmälern. Auch der schmalere Sendelichtkegel ist immer noch unabhängig von dem Normöffnungswinkel. Die Fokussierung dient nur dazu, am Lichtempfänger für eine höhere Intensität des einfallenden Lichts zu sorgen. Je nach Reichweite genügt bereits eine Linsenkuppe oder Reflektoren am Lichtsender, um eine ausreichende Strahlstärke zu erreichen. Derartige Lichtsender sind als fertige Bauteile erhältlich.

Bevorzugt ist eine Vielzahl von Lichtsendern an einem flexiblen Träger angebracht, insbesondere an einem Schlauch. Der flexible Träger kann entlang einer verspringenden Fläche oder integriert in ergonomisch gestalteten Flächen montiert werden. Der Sensor muss also nicht mehr an rechtwinkligen Strukturen angebracht werden, sondern kann sich einer Oberfläche anpassen. Dadurch ist das Schutzfeld anpassbar und eine verbesserte Montage in einem größeren Anwendungsfeld möglich.

Bevorzugt ist eine Vielzahl von Lichtempfängern an einem flexiblen Träger angebracht, insbesondere an einem Schlauch, wobei jede Empfangsoptik relativ zu dem zugehörigen Lichtempfänger ortsfest verbunden ist. In diesem Fall können die soeben für die Lichtsender genannten Vorteile auch für die Lichtempfänger erreicht werden. Durch die starre Anordnung der Empfangsoptik gegenüber dem zugehörigen Lichtsender bleibt der Empfangslichtkegel mit seinem höchstens halben Normöffnungswinkel erhalten. Eine veränderte Orientierung von Lichtsender zu Lichtempfänger durch die flexiblen Träger kann durch das Einlernen der Sollposition in zumindest einem weiten Bereich kompensiert werden.

Noch bevorzugter ist der flexible Träger und die Auswertungseinheit für ein Abtrennen eines Teils der Lichtempfänger und/oder der Lichtsender ausgebildet. Dadurch lassen sich verschiedene Schutzfeldhöhen erstellen, und der Sensor lässt sich an unterschiedliche Einsatzorte anpassen. Der Anwender kann dabei immer auf den gleichen Universalschlauch zugreifen und ihn selbst ohne weiteren Aufwand anpassen. Er muss sich also nur noch auf eine geringere Anzahl von Sensorvarianten einstellen.

Vorteilhafterweise sind die Lichtsender und/oder Lichtempfänger in Reihe geschaltet. Damit können sie auf einfache Weise mit einer gemeinsamen Stromversorgung und Auswertungseinheit angesteuert werden, und bei einem Abtrennen eines Teils der Lichtsender/Lichtempfänger bleibt die Verbindung der übrigen Elemente erhalten.

Bevorzugt ist der Sensor eine Lichtschranke oder ein Lichtgitter. Diese beiden Sensortypen werden besonders häufig für Absicherungsaufgaben eingesetzt, bei denen Umspiegelungssicherheit und einfache Ausrichtbarkeit eine Rolle spielen.

In Weiterbildung eines Lichtgitters ist eine Vielzahl von Lichtsendern und Lichtempfängern in zwei Gehäusen untergebracht, so dass sich im Betrieb jeweils ein Lichtsender und ein Lichtempfänger gegenüberstehen. In jedem der beiden Gehäuse können also Lichtsender und Lichtempfänger gemischt werden; die Lichtsender müssen nicht notwendig als homogene Gruppe den Lichtempfängern gegenüberstehen, solange nur die Paare einander zuordenbar bleiben. So ist mehr Flexibilität bei der Anordnung gegeben.

In einer Ausführungsform der Erfindung ist der Lichtsender mit einer eigenen Ansteuerungseinheit und Stromversorgung verbunden, und die Ansteuerungseinheit ist dafür ausgebildet, sich mit der Auswertungseinheit des Lichtempfängers optisch zu synchronisieren. Der Lichtsender ist in diesem Fall autark und kann einzeln aufgestellt werden.

Alternativ sind Lichtsender und Lichtempfänger mit der Auswertungseinheit und einer gemeinsamen Stromversorgung verbunden, wobei die Auswertungseinheit dafür ausgebildet ist, Lichtsender und Lichtempfänger optisch und/oder elektronisch zu synchronisieren. Es bleibt je nach Anwendung die Wahl, ob eine optische oder elektronische Synchronisierung zu bevorzugen ist.

Das erfindungsgemäße Verfahren kann mit analogen Merkmalen fortgebildet werden, wie sie beispielhaft, aber nicht abschließend in den sich anschließenden Unteransprüchen angegeben sind, und zeigt dabei ähnliche Vorteile.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:

Fig. 1        eine Seitenansicht einer Ausführungsform der Erfindung mit einer Illustration der verschiedenen Öffnungswinkel;

Fig. 2a       eine Draufsicht auf ein Lichtsender- und Lichtempfängerpaar zur Erläuterung der erfindungsgemäßen Erfüllung der Umspiegelungsbedingung;

Fig. 2b       eine Draufsicht auf ein Lichtsender- und Lichtempfängerpaar zum Vergleich mit der Umspiegelungsbedingung nach dem Stand der Technik und dem Nachweis, dass die erfindungsgemäße Bedingung äquivalent ist;

Fig. 2c       eine skizzenhafte Darstellung der Normbedingungen zur Umspiegelungssicherheit;

Fig. 3        eine dreidimensionale Darstellung zur Erläuterung des Einlernens der Soll-Lichtempfangsposition auf dem Lichtempfänger;

Fig. 4        eine Draufsicht der Darstellung gemäß Fig. 3; und

Fig. 5        eine Darstellung einer zweiten Ausführungsform der Erfindung mit Lichtsendern auf einem flexiblen Träger.

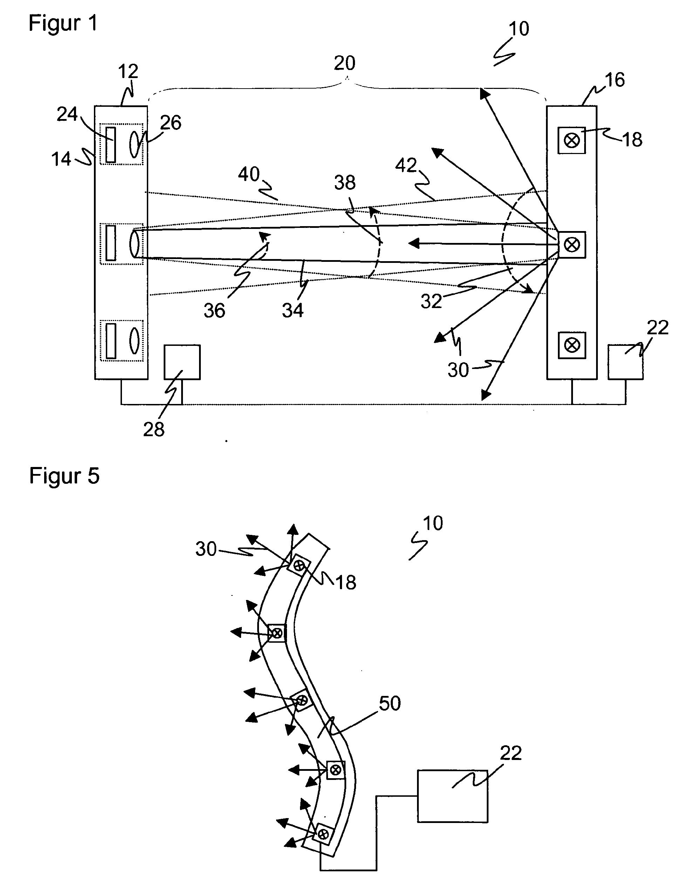

Figur 1 zeigt eine erste Ausführungsform des erfindungsgemäßen Sensors 10. Der Sensor 10 weist ein Empfängergehäuse 12 mit Lichtempfängern 14 und ein Sendergehäuse 16 mit Lichtsendern 18 auf. Meist werden wie dargestellt alle Lichtsender 18 in einem Gehäuse 16 und alle Lichtempfänger 14 in dem anderen Gehäuse 12 untergebracht, um die mögliche Variantenzahl zu reduzieren. Das muss aber nicht notwendig der Fall sein, es können auch in jedem Gehäuse 12, 16 Lichtsender 18 und Lichtempfänger 14 gemischt angeordnet werden, solange jeweils eine Paarzuordnung jedes Lichtsenders 18 zu einem Lichtempfänger 14 möglich ist.

Zwischen Empfängergehäuse 12 und Sendergehäuse 16 spannt sich ein Überwachungsbereich 20 auf, wobei dort eindringende Objekte von dem Sensor 10 erkannt werden, weil sie den direkten Lichtweg von den Lichtsendern 18 zu den Lichtempfängern 14 blockieren. Der Abstand der Lichtsender 18 beziehungsweise der Lichtempfänger 14 untereinander legt dabei die maximal detektierte Objektgröße fest. Ein kleineres Objekt kann und soll zwischen zwei Lichtstrahlen unentdeckt bleiben, weil angenommen wird, dass dieses kleine Objekt den Überwachungsbereich 20 durchqueren darf. Wenn der Sensor 10 zur Absicherung eines Gefahrenbereichs eingesetzt ist, ist der Abstand kleiner gewählt als jedes mögliche Körperteil, das in den Überwachungsbereich 20 eindringen könnte.

Die Lichtsender 18 sind beispielsweise Halbleiterlichtquellen wie LEDs oder Laserdioden. Sie senden Licht in einem schmalen Wellenlängenbereich aus, der den Lichtempfängern 14 beziehungsweise nachgeordneter Auswertungselektronik zur Unterscheidung von Umgebungs- und Störlicht bekannt ist. Der Wellenlängenbereich kann im sichtbaren, infraroten oder ultravioletten Bereich liegen. Das Sendergehäuse 16 und alle Lichtsender 18 sind mit einer Versorgungs- und Ansteuerungseinheit 22 verbunden, wodurch die Lichtsender 18 an- und ausgeschaltet oder mit einem Identitätsmuster zum Aufprägen eines Signalcodes auf das Sendelicht versehen werden können. Derartige Signalcodes dienen dazu, die Lichtsender 18 bei der Auswertung des empfangenen Lichts individuell erkennen zu können.

Die Lichtempfänger 14 weisen jeweils einen eigentlichen Lichtempfänger oder Empfangschip 24 und eine zugeordnete Empfangsoptik 26 auf. Der Empfangschip 24 kann eine einfache Photodiode sein, ist aber in einer bevorzugten Ausführungsform ortsauflösend, beispielsweise eine PSD (Position sensing diode) oder ein Chip mit einzelnen Empfangspixeln wie ein CCD- oder CMOS Chip. Dabei können die Empfangspixel insbesondere zeilen- oder matrixförmig angeordnet sein.

Eine Auswertungseinheit 28 ist mit dem Empfängergehäuse 12 und dessen Lichtempfängern 14 verbunden. Die Auswertungseinheit 28 ist mit der Ansteuerungseinheit 22 des Sendergehäuses 14 verbunden. Über diese Verbindung kann die Synchronisation zwischen Lichtsendern 18 und Lichtempfängern 14 auf elektronischem und/oder optischem Wege stattfinden. Alternativ kann auch keine Verbindung bestehen und die Synchronisation optisch erfolgen. Dazu können die oben genannten Signalcodes verwendet werden, um jeden Lichtsender 18 zu erkennen, die etwa per Multiplexing nacheinander Licht gemäß dem Signalcode ausstrahlen und somit eingelernt werden können.

Die Lichtsender 18 strahlen ihr Licht 30 in einen großen Winkelbereich 32, der ohne besondere Bündelungsmaßnahmen nur grob in Richtung der Lichtempfänger 14 liegt. Deshalb benötigen die Lichtsender 18 auch keine Blenden oder Sendeoptik. Es kann eine Sendeoptik zu dem Zweck vorhanden sein, das Licht 30 zur Erreichung einer größeren Reichweite zu bündeln. Diese Sendeoptik ist aber nicht dafür ausgebildet, eine Umspiegelungssicherheit zu erreichen und soll nicht zu genau fokussieren, so dass die Lichtsender 18 stets wegen ihres großen Sendeöffnungswinkels 32 sehr einfach ausgerichtet werden können. Der Winkelbereich 32 ist in der Realität abweichend von der notwendig flachen Seitenansicht der Figur 1 durch einen Raumwinkel festgelegt, und der von dem Lichtsender 18 lichterfüllte Bereich bildet einen Sendelichtkegel. Da dieser Sendelichtkegel einen so großen Öffnungswinkel hat, ist von vornherein oder nach allenfalls sehr grober und einfacher Ausrichtung sichergestellt, dass der zugehörige Lichtempfänger 18 innerhalb des Sendelichtkegels liegt.

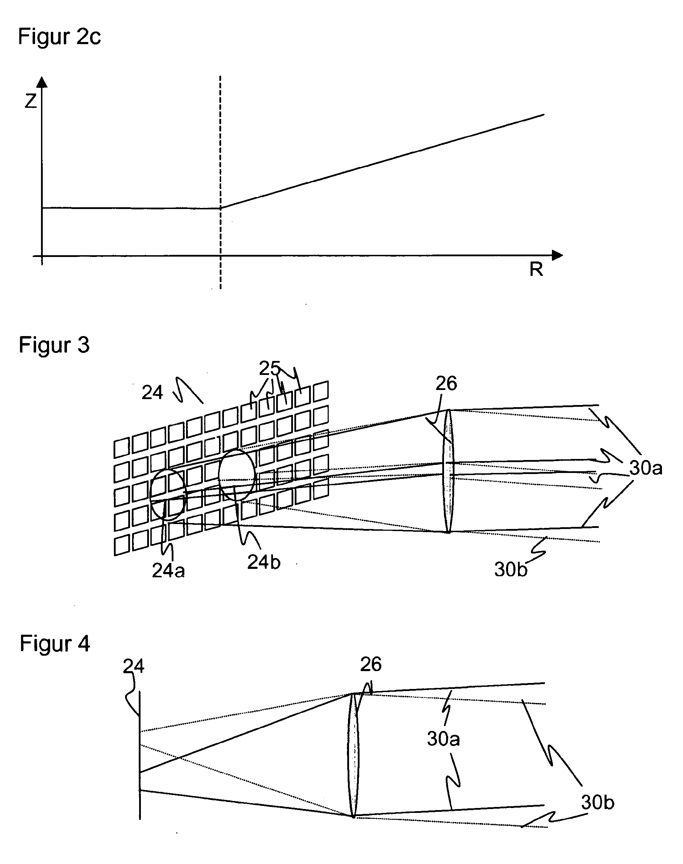

Auf die Lichtempfänger 14 umgekehrt trifft nur solches Licht, das innerhalb eines Empfangslichtkegels 34 des Öffnungswinkels 36 liegt. Der Empfangsöffnungswinkel 36 ist klein und höchstens halb so groß wie ein Normöffnungswinkel 38. Damit der zugehörige Lichtsender 14 innerhalb des Empfangslichtkegels 34 liegt, muss der Lichtempfänger 14 genau gegenüber dem zugehörigen Lichtsender 18 ausgerichtet sein. Der Empfangsöffnungswinkel 36 kann durch Blenden und/oder die Empfangsoptik 26 eingestellt werden. Eine Ortsauflösung des Empfangschips 24 ermöglicht aber erfindungsgemäß sowohl eine einfache Einstellung des Empfangsöffnungswinkels 36 als auch eine erheblich erleichterte Ausrichtung, wie weiter unten noch im Zusammenhang mit den Figuren 3 und 4 erläutert wird.

Um die Bedingung an den Öffnungswinkel 36 des Empfangslichtkegels besser zu verstehen, sind in Figur 1 gestrichelt Sendelichtkegel 40 und Empfangslichtkegel 42 gemäß dem Stand der Technik eingezeichnet. Beide Kegel 40, 42 erfüllen die Normbedingung, dass ihr Öffnungswinkel höchstens gleich dem Normöffnungswinkel 38 ist. Die Ausrichtbedingung ist hier eine zweistufige: Wie auch erfindungsgemäß muss der Lichtsender 18 im Stand der Technik im Empfangslichtkegel des Lichtempfängers 14 liegen. Zusätzlich muss aber auch der Lichtempfänger 14 im Sendelichtkegel 18 liegen. Diese letztgenannte Bedingung ist erfindungsgemäß von vornherein wegen der Größe 32 des Sendelichtkegels erfüllt.

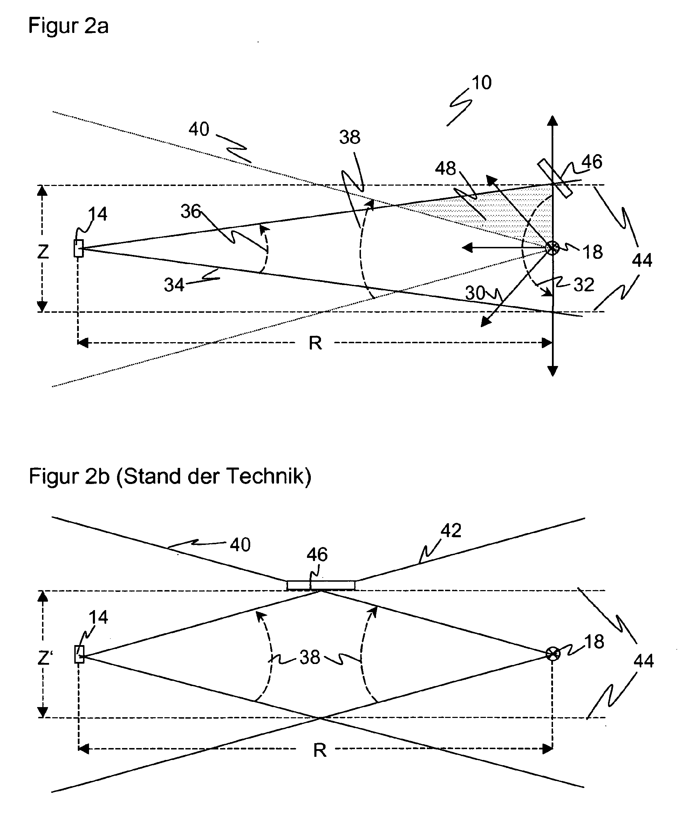

Im Stand der Technik sorgt die doppelte Bedingung durch den schmalen Sende-und Empfangslichtkegel 40, 42 für ausreichende Umspiegelungssicherheit. Erfindungsgemäß ist die Normanforderung bereits einseitig durch Bedingungen an den Empfangslichtkegel 34 erfüllt. Dies wird nunmehr anhand der Figuren 2a und 2b erläutert. Dabei bezeichnen hier und im Folgenden gleiche Bezugszeichen die gleichen Merkmale.

Figur 2a zeigt eine Draufsicht auf ein einzelnes Paar aus einem Lichtsender 18 und einem Lichtempfänger 14 gemäß der Erfindung. Der Sendeöffnungswinkel 32 ist auf den für die Umspiegelungssicherheit schlechtesten Fall von 180° eingestellt. Ein noch größerer Sendeöffnungswinkel 32 bringt keine Vorteile mehr und ist zumeist ohnehin durch eine Fassung oder ein Gehäuse unmöglich gemacht. Genügt dieser schlechteste Fall der Normanforderung an die Umspiegelungssicherheit, so gilt dies erst recht für alle anderen denkbaren Fälle.

Sicherheitsnormen, insbesondere die IEC 61496-2, schreiben eine Umspiegelungssicherheit des Sensors 10 gegenüber reflektierenden Flächen vor, die einen vorgeschriebenen Mindestabstand zu dem Sensor 10 haben. Umspiegelung bedeutet, dass Licht des Lichtsenders 18 nicht auf dem direkten Weg, sondern nach Reflexion an einer oder mehreren reflektierenden Flächen zu dem zugehörigen Lichtempfänger 14 gelangt. Dabei könnte der direkte Weg von Lichtsender 18 zu Lichtempfänger 14 durch ein Objekt in dem Überwachungsbereich 20 blockiert sein, was aber der Auswertungseinheit 28 entgeht, weil das Licht auf dem indirekten Weg nach Umspiegelungen den Lichtempfänger 14 dennoch trifft. Diese Fehlfunktion darf nicht auftreten, da die Gesundheit des Bedienpersonals davon abhängen kann.

Die Sicherheitsnorm ist daher nur erfüllt, wenn keine Position und Orientierung einer oder mehrerer reflektierender Flächen denkbar ist, die einen Mindestabstand zu dem Sensor 10 einhalten und dennoch zu einer Umspiegelung führen. Dieser Mindestabstand definiert also einen Normbereich 44 als "Tunnel" oder Zylinder um die Verbindungsachse zwischen Lichtsender 18 und Lichtempfänger 14, der in Figur 2a durch gestrichelte Linien im Abstand Z zueinander dargestellt ist. Innerhalb dieses Normbereichs 44 darf auch eine Umspiegelung stattfinden, da er schmal genug ist und derartige umspiegelnde Objekte meist ohnehin unterhalb der durch den Abstand der Lichtempfänger 14 untereinander festgelegten Auflösung des Sensors liegen. Der von der Norm festgelegte Mindestabstand Z ist nicht konstant, sondern abhängig von dem Abstand R zwischen Lichtsender 18 und Lichtempfänger 14.

Der Durchmesser Z desjenigen Bereichs, außerhalb dessen keine Umspiegelung mehr möglich ist, kann durch eine spiegelnde Fläche 46 an der denkbar ungünstigsten Position bestimmt werden. Wie in Figur 2a leicht erkennbar, könnte eine Fläche 46 in größerem Abstand Z als die dargestellte Fläche 46 kein Licht mehr in den Empfangslichtkegel 34 reflektieren. Damit ist, wenn $\alpha$ der Betrag des Empfangsöffnungswinkels 36 ist, eine Norm mit der Bedingung $Z = 2R \tan(\alpha/2)$ erfüllt.

Der in Figur 2a zum Vergleich gestrichelt eingezeichnete Sendelichtkegel 40 gemäß dem Stand der Technik würde sicherstellen, dass auch in dem schraffierten Bereich 48 keine Umspiegelung möglich ist, weil hier herkömmlich kein Sendelicht vorhanden wäre. Die Norm legt aber einen zylinderförmigen Normbereich 44 fest, so dass es auf diesen Unterschied nicht ankommt: Die zusätzliche Umspiegelungssicherheit in dem Bereich 48 ist eine theoretische, die in der Praxis keine Vorteile bringt und deshalb von der Norm nicht vorgeschrieben ist.

Die Figur 2b zeigt zum Vergleich einen Sensor 10 nach dem Stand der Technik, bei dem sowohl Sendelichtkegel 40 als auch Empfangslichtkegel 42 einen Öffnungswinkel aufweisen, der einem vorgeschriebenen Normöffnungswinkel 38 entspricht. Wie man der Figur 2b entnimmt, ist hier der am weitesten von der Verbindungsachse zwischen Lichtsender 18 und Lichtempfänger 14 beabstandete Ort für eine umspiegelnde Fläche 46 genau in der Mitte zwischen Lichtsender 14 und Lichtempfänger 18 angeordnet. Der Normbereich 44 ist also ein Zylinder des Durchmessers Z', dessen Mantelflächen parallel zu der Verbindungsachse stehen und der durch die Schnittkreise von Sendelichtkegel und Empfangslichtkegel geht.

Bezeichnet man den Normöffnungswinkel 38 mit β, so folgt aus der Figur 2b unmittelbar die Beziehung Z'=2 R/2 tan(β/2). Mit der erfindungsgemäßen Wahl von höchstens α = β/2 gilt dann auch β/2=α/2+α/2 und somit

$$Z' = R \tan(\beta/2) = R \cdot \tan(\alpha/2+\alpha/2) = R \left[2 \tan(\alpha/2) / (1+\tan^2(\alpha/2))\right] \approx 2R \tan(\alpha/2) = Z.$$

Die Abschätzung im vorletzten Schritt ist gerechtfertigt, da α klein und somit $\tan^2(\alpha/2)$ vernachlässigbar gegenüber 1 ist. Im Zweifel kann zum Ausgleich der Empfangsöffnungswinkel 36 etwas kleiner als die Hälfte des Normöffnungswinkels 38 eingestellt werden. Der durch Z festgelegte erfindungsgemäße und der durch Z' festgelegte herkömmliche Normbereich 44 ist also der gleiche. Somit wird die erfindungsgemäße Lösung der Norm bereits durch Einstellung allein des Öffnungswinkels an den Lichtempfängern 14 bzw. deren Empfangsoptiken 26 und/oder Blenden gerecht.

Figur 2c zeigt skizzenhaft den Verlauf des Normabstands Z mit der Entfernung R zwischen Lichtsender 18 und Lichtempfänger 14. In einem Nahbereich, der in Figur 2c mit der gestrichelten senkrechten Linie endet, ist wegen der endlichen Breite des Lichtflecks ein konstanter Abstand Z vorgegeben, der dann in einem übrigen Fernbereich an einen Winkel gekoppelt ist. Nach der IEC 61496-2 endet der Nahbereich bei einem Abstand R von 3m, in dem für Z ein konstanter Abstand von 262mm gefordert wird (Typ 4), und die nachfolgende Steigung ist an einen Winkel von 2,5° gekoppelt. Daraus berechnet sich Z im Fernbereich genau analog der oben angegebenen Formel Z=2R tan(2,5°). Selbstverständlich sind alle Zahlenwerte exemplarisch zu verstehen, da in der Praxis zwar die geltende Norm einzuhalten ist, die Zahlenwerte aber aus einer Abwägung und keinem technischen Zwang heraus festgelegt sind, so dass der Anwendungsbereich der Erfindung nicht darauf beschränkt ist.

Zu beachten ist, dass die Figuren 2a und 2b insofern idealisieren, als die Lichtkegel symmetrisch zu der Verbindungsachse von Lichtsender 18 und Lichtempfänger 14 liegen. Die Ausrichtung kann dies nicht garantieren, weil das Ausrichtkriterium ist, ob ein Lichtempfang möglich ist, der also Toleranzen im Bereich bis α (oder β nach dem Stand der Technik) zulässt. Der Normbereich 44 ist dann einfach parallelverschoben, ohne dass seine Größe sich ändert. Diese Abweichungen von der Symmetrie treten aber auch im Stand der Technik auf; die obige Betrachtung lässt sich ganz analog auch bei nicht symmetrischer Ausrichtung durchführen und zeigt, dass die Erfindung ebenso genau ist wie ein herkömmlicher Sensor mit Sende-und Empfangsöffnungswinkeln des Betrags des Normöffnungswinkels 38.

Anhand der Figuren 3 und 4 wird nunmehr erläutert, wie die Ausrichtung des Lichtempfängers 14 durch einen ortsauflösenden Empfangschip 24 erheblich vereinfacht werden kann. Figur 3 zeigt in einer räumlichen Darstellung den Empfangschip 24, der aus einer Matrix einzelner Lichtempfangselemente 25 oder Pixel zusammengesetzt ist. Mit durchgezogenen Linien ist Sendelicht 30a des Lichtsenders 18 dargestellt, das von der Empfangsoptik 26 fokussiert und auf dem Empfangschip 24 zu einem Lichtfleck 24a gebündelt wird. Mit gestrichelten Linien ist Sendelicht 30b des Lichtsenders 18 dargestellt, das aus einer anderen Richtung eingestrahlt und zu einem Lichtfleck 24b gebündelt wird. Die Figur 4 zeigt dieselbe Situation in der Draufsicht, um den Strahlverlauf übersichtlicher darzustellen.

Bei der Ausrichtung des Sensors 10 in einer Einlernphase wird nun der Lichtsender 18 eingeschaltet und ermittelt, wo sein Licht 30a auf dem Empfangschip 24 auftrifft, das heißt welche Lichtempfangselemente 25 von dem Lichtfleck 24a überdeckt sind. Die Auswertungseinheit 28 speichert die Position beziehungsweise Identität dieser Lichtempfangselemente 25 als eine Sollposition. Somit genügt es, wenn der Bediener den Sensor 10 genau genug ausrichtet, dass der Lichtfleck 24a überhaupt irgendwo den Empfangschip 24 trifft. Die Größe des Empfangschips 24 ist dabei in erster Linie durch Herstellungskosten begrenzt, wobei eine größere und feiner aufgelöste Matrix zwar teurer ist, aber eine einfachere und genauere Ausrichtung ermöglicht. Hier ist unter Kostengesichtspunkten zu wählen, ob eine Matrix von 16x16, 128x128 oder noch mehr Pixeln eingesetzt wird.

Im Betrieb wird dann eine direkte Lichtverbindung zwischen Lichtsender 18 und Lichtempfänger 14 von der Auswertungseinheit 28 nur dann angenommen, wenn genau diejenigen Pixel von Sendelicht 30a getroffen sind, die in der Sollposition eingelernt worden sind. Die übrigen Pixel 25 sind bei dieser Auswertung quasi stumm geschaltet. Das dort eintreffende Licht kann aber dennoch ausgewertet werden, beispielsweise um Informationen über störendes Umgebungslicht zu gewinnen. Trifft das Sendelicht 30b aus einer anderen Richtung ein, so fällt es nicht mehr auf die Sollposition unterhalb des eingelernten Lichtflecks 24a, sondern auf andere Lichtempfangselemente 25 an einer anderen Position 24b. Die Auswertungseinheit 28 empfängt also zwar Licht des Lichtsenders 18, aber nicht an der eingelernten und erwarteten Sollposition. Dies wird in der Auswertungseinheit 28 so behandelt wie ein unterbrochener Lichtstrahl. Es gibt nämlich für ein Wandern der Empfangsposition auf dem Empfangschip 24 nur zwei Gründe, die beide zu einem Ansprechen des Sensors 10 führen müssen: entweder ist der Sensor 10 dejustiert oder das Sendelicht 30 ist nicht auf einem direkten, sondern nach Umspiegelung auf einem indirekten Weg zum Lichtempfänger 14 gelangt.

Durch den ortsauflösenden Lichtempfänger 14 wird damit die Ausrichtung erheblich erleichtert. Die Sollposition, deren Größe und Lagegenauigkeit von der Auflösungsfähigkeit der Matrix 24 und der Güte der Optik 26 abhängt, legt somit letztlich den Empfangsöffnungswinkel 36 fest. Deshalb lässt sich auch der halbe geforderte Normöffnungswinkel 38 mit einem einfachen Ausrichtverfahren einstellen. Das Einlernen der Sollposition ermöglicht wahlweise, auch empfangsseitig auf eine mechanische Blende zu verzichten.

Figur 5 zeigt eine weitere Ausführungsform der Erfindung, bei dem die Lichtsender 18 nicht in einem starren Gehäuse 16, sondern auf einem flexiblen Träger 50 angeordnet sind. Die Lichtsender 18 bilden somit einen flexiblen Lichtschlauch, der sich an eine nahezu beliebige Kontur anpassen kann. Somit können die Lichtsender 18 nicht nur an glatten Wänden, sondern auch entlang von Biegungen verlegt werden und auch einfach in abzusichernde Maschinen integriert werden. Die Lichtsender 18 können dabei in Reihe geschaltet werden, so dass der flexible Träger 50 an seinem einen Ende abgeschnitten und somit gekürzt werden kann. An dem anderen Ende des flexiblen Träger 50 sind die Lichtsender 18 mit der Versorgungs-und Ansteuerungseinheit 22 verbunden.

Der flexible Träger 50 beziehungsweise dessen Ansteuerung 22 kann optisch mit der empfangsseitigen Auswertungseinheit 28 synchronisiert werden. Wegen des nahezu beliebig großen Sendeöffnungswinkels 32 kann der Lichtschlauch ohne besondere Justierungsmaßnahmen an der einen Seite des zu schützenden Bereiches montiert werden. Er ist dort mit seiner Ansteuerung und Versorgung 22 autark. Ein flexibler Träger 50 ist bei herkömmlichen Sensoren deshalb nicht denkbar, weil die Lichtsender 18 mit ihrem schmalen Sendelichtkegel ihre gegenüberliegenden Lichtempfänger 14 nicht erreichen würden. Der Vorteil der Flexibilität würde verloren gehen, weil an jeder Stelle, an die ein Lichtsender 18 sitzt, doch wieder auf eine zumindest annähernd parallele Ausrichtung zu achten wäre.

In einer weiteren nicht dargestellten Ausführungsform können auch die Lichtempfänger 14 auf einem flexiblen Träger angeordnet werden. In diesem Fall muss zumindest die Empfangsoptik 26 mit dem Empfangschip 24 starr verbunden bleiben. Ist der flexible Träger mit den Lichtempfängern 14 einmal verlegt, so kann jeweils die Sollposition durch nacheinander Ansteuern der einzelnen Lichtsender 18 / Lichtempfänger 14 eingelernt und somit die Ausrichtung sichergestellt werden. Im Gegensatz zu dem flexiblen Träger 50 der Lichtsender 18 kann der flexible Träger mit den Lichtempfängern 14 nicht gänzlich beliebig verlegt werden, weil das Licht durch die Empfangsoptik 26 noch auf den Empfangschip 24 gelenkt werden muss. Der ortsauflösende Lichtempfänger 14 stellt aber zumindest einen recht großen Winkelbereich bereit, in dem der flexible Träger verlegt werden kann.

Zu beachten ist, dass das von Lichtsendern 18 und Lichtempfängern 14 gebildete Lichtgitter zumindest genauso eng ist wie eines, bei dem die flexiblen Träger ganz gerade ausgerichtet sind. Durch Verbindungen kann nämlich der Abstand der Lichtsender 18 beziehungsweise der Lichtempfänger 14 untereinander höchstens verringert, niemals aber vergrößert werden. Damit ist die durch den Abstand auf dem flexiblen Träger gegebene Auflösung zumindest erreicht, wenn nicht verbessert. Die Größe des entstehenden Schutzfeldes andererseits, die nicht mehr einfach durch Gehäuseabmessungen vorgegeben ist, sondern durch die Flexibilität eine nicht unbedingt unmittelbar erkennbare Gestalt annimmt, ist nach der Montage mit einem Prüfstab zu überprüfen. Im Zweifel kann zunächst ein etwas längerer flexibler Träger mit einigen zusätzlichen Lichtsendern 18 und/oder Lichtempfängern 14 gewählt und dann auf die erforderliche Schutzfeldgröße zurechtgekürzt werden.

Die flexiblen Lichtschläuche ermöglichen eine komponentenweise Integration des Sensors 10 in einen bestehenden Maschinenpark. Es muss nicht ein starres, fertiges Lichtgitter erworben und eingerichtet werden, sondern der Sensor kann flexibel integriert hinzugefügt werden, obwohl die Montage einfach und die Sicherheit gewährleistet bleibt.

**Patentansprüche**

1.  Optoelektronischer Sensor (10) zur Objekterfassung in einem Überwachungsbereich (20) mit mindestens einem Lichtsender (18), und je einem zugehörigen Lichtempfänger (14),
    wobei Lichtsender (18) und Lichtempfänger (14) derart zueinander ausrichtbar sind, dass von dem Lichtsender (18) ausgesandtes Licht (30) auf direktem Weg in dem Lichtempfänger (14) empfangen werden kann, und weiterhin für die Erfüllung einer Normbedingung ausgebildet sind, wobei die Normbedingung einen Normbereich (44) festlegt, in dem keine reflektierenden Flächen (46) vorhanden sind, so dass von dem Lichtsender (18) ausgesandtes Licht (30), das einmal außerhalb des Normbereichs (44) gelangt ist, auch nach Reflexion nicht mehr von dem Lichtempfänger (14) empfangen werden kann,

wobei der Normbereich (44) den Überlappungsbereich aus Sendelichtkegel (40) des Lichtsenders (18) und Empfangslichtkegel (42) des Lichtempfängers (14) jeweils des Normöffnungswinkels (38) einschließt,

wobei eine Auswertungseinheit (28) für ein Detektieren einer Unterbrechung des Lichtempfangs als Objekterfassung ausgebildet ist,

**dadurch gekennzeichnet,**

**dass** der Lichtsender (18) eine Linsenkuppe oder Reflektoren, um eine ausreichende Strahlstärke zu erreichen, und keine mechanischen Blenden oder abbildende Sendeoptik, somit einen Sendelichtkegel mit beliebigem Öffnungswinkel (32) größer dem Normöffnungswinkel (38) aufweist und der Lichtempfänger (14) mit Hilfe einer Empfangsoptik (26) für eine Begrenzung des Öffnungswinkels (36) des Empfangslichtkegels (34) auf höchstens die Hälfte des Normöffnungswinkels (38) ausgebildet ist.

2.  Sensor (10) nach Anspruch 1,
    wobei der Lichtempfänger (14) ortsauflösend ist und die Auswertungseinheit (28) weiter für die Bestimmung einer Soll-Lichtempfangsposition (24a) auf dem Lichtempfänger (14) und Detektion eines Lichtempfangs außerhalb der Soll-Lichtempfangsposition (24a) als Objekterfassung ausgebildet ist.

3.  Sensor (10) nach einem der vorhergehenden Ansprüche,
    wobei eine Vielzahl von Lichtsendern (18) an einem flexiblen Träger (50), insbesondere an einem Schlauch, angebracht sind.

4.  Sensor (10) nach einem der vorhergehenden Ansprüche,
    wobei eine Vielzahl von Lichtempfängern (14) an einem flexiblen Träger, insbesondere an einem Schlauch, angebracht sind, wobei jede Empfangsoptik (26) relativ zu dem zugehörigen Lichtempfänger (14, 24) ortsfest verbunden ist.

5.  Sensor (10) nach Anspruch 4 oder 5,
    wobei der flexible Träger und die Auswertungseinheit (22, 28) für ein Abtrennen eines Teils der Lichtempfänger (14) und/oder der Lichtsender (18) ausgebildet ist.

6.  Sensor (10) nach einem der vorhergehenden Ansprüche,
    wobei die Lichtsender (18) und/oder Lichtempfänger (14) in Reihe geschaltet sind.

7.  Sensor (10) nach einem der vorhergehenden Ansprüche,
    wobei der Sensor (10) eine Lichtschranke oder ein Lichtgitter ist.

8.  Sensor (10) nach Anspruch 8,
    wobei eine Vielzahl von Lichtsendern (18) und Lichtempfängern (14) in zwei Gehäusen untergebracht ist, so dass sich im Betrieb jeweils ein Lichtsender (18) und ein Lichtempfänger (14) gegenüberstehen.

9.  Sensor (10) nach einem der vorhergehenden Ansprüche,
    wobei der Lichtsender (18) mit einer eigenen Ansteuerungseinheit (22) und Stromversorgung verbunden ist und die Ansteuerungseinheit (22) dafür ausgebildet ist, sich mit der Auswertungseinheit (28) des Lichtempfängers (14) optisch zu synchronisieren.

10. Sensor (10) nach einem der vorhergehenden Ansprüche,
    wobei Lichtsender (18) und Lichtempfänger (14) mit der Auswertungseinheit (28) und mit einer gemeinsamen Stromversorgung verbunden sind, wobei die Auswertungseinheit (28) dafür ausgebildet ist, Lichtsender (18) und Lichtempfänger (14) optisch und/oder elektronisch zu synchronisieren.

11. Verfahren zur Objekterfassung in einem Überwachungsbereich mit mindestens einem Lichtsender (18) und je einem zugehörigen Lichtempfänger (14), wobei Lichtsender (18) und Lichtempfänger (14) derart zueinander ausgerichtet werden, dass von dem Lichtsender (18) ausgesandtes Licht (30) auf direktem Weg in dem Lichtempfänger (14) empfangen wird,
    wobei eine Normbedingung erfüllt wird, die einen Normbereich (44) festlegt, in dem keine reflektierenden Flächen (46) vorhanden sind, so dass von dem Lichtsender (18) ausgesandtes Licht (30), das einmal außerhalb des Normbereichs (44) gelangt ist, auch nach Reflexion nicht mehr von dem Lichtempfänger (14) empfangen werden kann, wobei der Normbereich (44) den Überlappungsbereich aus Sendelichtkegel (40) des Lichtsenders (18) und Empfangslichtkegel (42) des Lichtempfängers (14) jeweils des Normöffnungswinkels (38) einschließt,

wobei eine Unterbrechung des Lichtempfangs als Objekterfassung detektiert wird,
**dadurch gekennzeichnet,**
**dass** die Normbedingung erfüllt wird, indem das Licht des Lichtsenders (18) mittels einer Linsenkuppe oder Reflektoren eine ausreichende Strahlstärke erreicht und ohne mechanischen Blenden oder abbildende Sendeoptik in einem Sendelichtkegel mit einem beliebigen Sendeöffnungswinkel (32) größer dem Normöffnungswinkel (38) ausgesandt wird und Licht in dem Lichtempfänger (14) nur innerhalb eines Empfangslichtkegels (34) mit einem Empfangsöffnungswinkel (36) höchstens gleich der Hälfte des Normöffnungswinkels (38) empfangen wird.

12. Verfahren nach Anspruch 11,
    wobei der Lichtempfänger (14) ortsauflösend ist und eine Soll-Lichtempfangsposition (24a) auf dem Lichtempfänger (14) bestimmt und ein Lichtempfang außerhalb der Soll-Lichtempfangsposition (24a) als Objekterfassung detektiert wird.

13. Verfahren nach Anspruch 11 oder 12,
    wobei der Sendelichtkegel (32) zur Vergrößerung der Reichweite verschmälert wird.

14. Verfahren nach einem der Ansprüche 11 bis 13,
    wobei die Lichtsender (18) und/oder die Lichtempfänger (14) jeweils untereinander auf einer Kurve angeordnet werden.

**Claims**

1. An optoelectronic sensor (10) for object detection in a monitored zone (20) having at least one light transmitter (18) and one associated light receiver (14) each,
   wherein the light transmitter (18) and the light receiver (14) can be mutually aligned, such that light (30) transmitted by the light transmitter (18) can be received in the light receiver (14) in a direct path, and are furthermore designed for the satisfaction of a standard condition, wherein the standard condition defines a standard region (44) in which no reflective surfaces (46) are present so that light (30) which is transmitted by the light transmitter (18) and which has once passed out of the standard region (44) can also no longer be received by the light receiver (14) after reflection; wherein the standard region (44) includes the overlap region of the transmitted light cone (40) of the light transmitter (18) and the received light cone (42) of the light receiver (44) in each case of the standard opening angle (38);
   wherein an evaluation unit (28) for detecting an interruption of the light reception is formed as an object detection;
   **characterised in that**
   the light transmitter (18) has a lens dome or reflectors to achieve a sufficient radiant intensity and does not have any mechanical diaphragms or imaging transmission optics, and thus has a transmitted light cone having any desired opening angle (32) greater than the standard opening angle (38), and the light receiver (14) is made for a bounding, with the aid of the reception optics (26), of the opening angle (36) of the received light cone (34) to at most half the standard opening angle (38).

2. A sensor (10) in accordance with claim 1,
   wherein the light receiver (14) is spatially resolving and the evaluation unit (28) is further made for the determination of a desired light reception position (24a) on the light receiver (14) and for the detection of a light reception outside the desired light reception position (24a) as an object detection.

3. A sensor (10) in accordance with any one of the preceding claims,
   wherein a plurality of light transmitters (18) are attached to a flexible carrier (50), in particular to a hose.

4. A sensor (10) in accordance with any one of the preceding claims,
   wherein a plurality of light receivers (14) are attached to a flexible carrier, in particular to a hose, with each reception optics (26) being fastened in a topically fixed manner relative to the associated light receiver (14, 24).

5. A sensor (10) in accordance with claim 3 or claim 4,
   wherein the flexible carrier and the evaluation unit (22, 28) are made for a separation of some of the light receivers (14) and/or some of the light transmitters (18).

6. A sensor (10) in accordance with any one of the preceding claims,

wherein the light transmitter (18) and/or the light receiver (14) are connected in series.

7. A sensor (10) in accordance with any one of the preceding claims,
wherein the sensor (10) is a light barrier or a light grid.

8. A sensor (10) in accordance with claim 7,
wherein a plurality of light transmitters (18) and light receivers (14) are accommodated in two housings so that one respective light transmitter (18) and one respective light receiver (14) are opposite one another in operation.

9. A sensor (10) in accordance with any one of the preceding claims,
wherein the light transmitter (18) is connected to its own control unit (22) and power supply and the control unit (22) is made to be optically synchronised with the evaluation unit (28) of the light receiver (14).

10. A sensor (10) in accordance with any one of the preceding claims,
wherein the light transmitter (18) and the light receiver (14) are connected to the evaluation unit (28) and to a common power supply, with the evaluation unit (28) being made to synchronise the light transmitter (18) and light receiver (14) optically and/or electronically.

11. A method of object detection in a monitored zone having at least one light transmitter (18) and one respective associated light receiver (14),
wherein the light transmitter (18) and the light receiver (14) are mutually aligned such that light (30) transmitted by the light transmitter (18) is received in the light receiver (1^4) in a direct path;
wherein a standard condition is satisfied which defines a standard region (44) in which no reflective surfaces (46) are present so that light (30) which is transmitted by the light transmitter (18) and which has once passed out of the standard region (44) can also no longer be received by the light receiver (14) after reflection; wherein the standard region ()44) includes the overlap region of the transmitted light cone (40) of the light transmitter (18) and the received light cone (42) of the light receiver (44) in each case of the standard opening angle (38);
wherein an interruption of the light reception is detected as an object detection,
**characterised in that**
the standard condition is satisfied **in that** the light of the light transmitter (18) reaches a sufficient radiant intensity by means of a lens dome or reflectors and is transmitted without mechanical diaphragm or imaging transmission optics in a transmitted light cone having any desired transmission opening angle (32) greater than the standard opening angle (38) and light is only received in the light receiver (14) within a received light cone (4) having a reception opening angle (36) at most equal to half the standard opening angle (38).

12. A method in accordance with claim 11,
wherein the light receiver (14) is spatially resolving and a desired light reception position (24a) is determined on the light receiver (14) a light reception outside the desired light transmission position (24a) is detected as an object detection.

13. A method in accordance with claim 11 or claim 12,
wherein the transmitted light cone (32) is narrowed to increase the range.

14. A method in accordance with any one of the claims 11 to 13,
wherein the light transmitter (18) and/or the light receiver (14) are each arranged beneath one another on a curve.

**Revendications**

1. Capteur optoélectronique (10) pour la constatation d'objets dans une zone surveillée (20) comprenant au moins un émetteur de lumière (18) et un récepteur de lumière respectivement associé (14),
dans lequel l'émetteur de lumière (18) et le récepteur de lumière (14) peuvent être orientés l'un par rapport à l'autre de telle façon que la lumière (30) émise par l'émetteur de lumière (18) peut être reçue en trajet direct dans le récepteur de lumière (14) et sont en outre réalisés pour satisfaire une condition de normalisation, ladite condition de normalisation imposant une zone normalisée (44) dans laquelle il n'existe aucune surface réfléchissante (46), de sorte que la lumière (30) émise par l'émetteur de lumière (18) et qui est parvenue une fois à l'extérieur de la zone normalisée (44) ne peut plus être reçue, même après réflexion, par le récepteur de lumière (14),
dans lequel la zone normalisée (44) inclut la zone de chevauchement formée par le cône de lumière émise (40) de l'émetteur de lumière (18) et le cône de lumière reçue (42) du récepteur de lumière (14), présentant respectivement l'angle d'ouverture normalisé (38),

dans lequel est prévue une unité d'évaluation (28) réalisée pour détecter une interruption de la réception de lumière à titre de constatation d'objet,

**caractérisé en ce que**

l'émetteur de lumière (18) comprend une coupole-lentille ou des réflecteurs, afin d'atteindre une intensité de rayonnement suffisante et ne comprend aucun diaphragme mécanique ni aucune optique émettrice d'imagerie, et présente ainsi un cône de lumière émise avec un angle d'ouverture quelconque (32) plus grand que l'angle d'ouverture normalisé (38), et le récepteur de lumière (14) est réalisé, à l'aide d'une optique réceptrice (26), en vue d'une limitation de l'angle d'ouverture (36) du cône de lumière reçue (34) au maximum à la moitié de l'angle d'ouverture normalisé (38).

2. Capteur (10) selon la revendication 1,
   dans lequel le récepteur de lumière (14) est à résolution locale et l'unité d'évaluation (28) est en outre réalisée pour déterminer une position de consigne (24a) pour la réception de lumière sur le récepteur de lumière (14) et pour détecter une réception de lumière à l'extérieur de la position de consigne (24a) pour la réception de lumière comme étant une constatation d'objet.

3. Capteur (10) selon l'une des revendications précédentes,
   dans lequel une pluralité d'émetteurs de lumière (18) sont montés sur un support flexible (50), en particulier sur un tuyau.

4. Capteur (10) selon l'une des revendications précédentes,
   dans lequel une pluralité de récepteurs de lumière (14) sont montés sur un support flexible, en particulier sur un tuyau, et chaque optique de réception (26) est reliée de manière stationnaire par rapport au récepteur de lumière associé (14, 24).

5. Capteur (10) selon la revendication 4 ou 5,
   dans lequel le support flexible et l'unité d'évaluation (22, 28) sont réalisés pour une séparation d'une partie du récepteur de lumière (14) et/ou de l'émetteur de lumière (18).

6. Capteur (10) selon l'une des revendications précédentes,
   dans lequel l'émetteur de lumière (18) et/ou le récepteur de lumière (14) sont branchés en série.

7. Capteur (10) selon l'une des revendications précédentes,
   dans lequel le capteur (10) est une barrière lumineuse ou une grille lumineuse.

8. Capteur (10) selon la revendication 8,
   dans lequel une pluralité d'émetteurs de lumière (18) et de récepteurs de lumière (14) sont logés dans deux boîtiers, de telle façon qu'en fonctionnement un émetteur de lumière (18) et un récepteur de lumière (14) sont respectivement opposés.

9. Capteur (10) selon l'une des revendications précédentes,
   dans lequel l'émetteur de lumière (18) est connecté à une propre unité de pilotage (22) et à une alimentation électrique, et l'unité de pilotage (22) est réalisée pour se synchroniser par voie optique avec l'unité d'évaluation (28) du récepteur de lumière (14).

10. Capteur (10) selon l'une des revendications précédentes,
    dans lequel l'émetteur de lumière (18) et le récepteur de lumière (14) sont connectés à l'unité d'évaluation (28) et à une alimentation électrique commune, et dans lequel l'unité d'évaluation (28) est réalisée pour synchroniser l'émetteur de lumière (18) et le récepteur de lumière (14) par voie optique et/ou électronique.

11. Procédé pour la constatation d'objets dans une zone surveillée avec au moins un émetteur de lumière (18) et un récepteur de lumière respectif associé (14), l'émetteur de lumière (18) et le récepteur de lumière (14) étant orientés l'un par rapport à l'autre de telle façon que la lumière (30) émise par l'émetteur de lumière (18) est reçue en trajet direct dans le récepteur de lumière (14),
    dans lequel on satisfait à une condition de normalisation qui impose une zone normalisée (44) dans laquelle il n'existe aucune surface réfléchissante (46), de sorte que la lumière (30) émise par l'émetteur de lumière (18) qui parvient une fois à l'extérieur de la zone normalisée (44) ne peut plus être reçue, même après réflexion, par le récepteur de lumière (14),

dans lequel la zone normalisée (44) inclut la zone de chevauchement formée par le cône de lumière émise (40) de l'émetteur de lumière (18) et par le cône de lumière reçue (42) du récepteur de lumière (14), présentant respectivement l'angle d'ouverture normalisé (38),

dans lequel une interruption de la réception de lumière est détectée comme étant une constatation d'objet,

**caractérisé en ce que**

la condition de normalisation est satisfaite du fait que la lumière de l'émetteur de lumière (18) atteint, au moyen d'une coupole-lentille ou au moyen de réflecteurs, une intensité de rayonnement suffisante et est émise sans aucun diaphragme mécanique ni aucune optique émettrice d'imagerie dans un cône de lumière émise avec un angle d'ouverture quelconque (32) plus grand que l'angle d'ouverture normalisé (38), et la lumière est reçue dans le récepteur de lumière (14) uniquement dans un cône de lumière reçue (34) avec un angle d'ouverture (36) de réception égal au maximum à la moitié de l'angle d'ouverture normalisé (38).

**12.** Procédé selon la revendication 11,
dans lequel le récepteur de lumière (14) est à résolution locale et détermine une position de consigne (24a) pour la réception de lumière sur le récepteur de lumière (14), et une réception de lumière à l'extérieur de la position de consigne (24a) pour la réception de lumière est détectée comme étant une constatation d'objet.

**13.** Procédé selon la revendication 11 ou 12,
dans lequel le cône de lumière émise (32) est rétréci pour augmenter la portée.

**14.** Procédé selon l'une des revendications 11 à 13,
dans lequel l'émetteur de lumière (18) et/ou le récepteur de lumière (14) sont agencés respectivement sur une courbe l'un au-dessous de l'autre.

**Figur 1**

**Figur 5**

Figur 2a

Figur 2b (Stand der Technik)

Figur 2c

Figur 3

Figur 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0889332 A1
- EP 0875873 B1
- DE 2005009517 U1
- DE 202005003051 U1